(19) Europäisches Patentamt
European Patent Office
Office européen des brevets

(11) **EP 1 674 233 B1**

(12) **EUROPEAN PATENT SPECIFICATION**

(45) Date of publication and mention
of the grant of the patent:
**20.02.2013 Bulletin 2013/08**

(51) Int Cl.:
***B29C 45/17*** *(2006.01)*      ***F16H 25/22*** *(2006.01)*

(21) Application number: **04792458.4**

(22) Date of filing: **15.10.2004**

(86) International application number:
**PCT/JP2004/015241**

(87) International publication number:
**WO 2005/037519 (28.04.2005 Gazette 2005/17)**

(54) **ELECTRIC INJECTION MOLDING DEVICE AND MOLDING METHOD USING THE SAME**

ELEKTRISCHE SPRITZGIESSVORRICHTUNG UND DIESE VERWENDENDES SPRITZGIESSVERFAHREN

DISPOSITIF DE MOULAGE PAR INJECTION ELECTRIQUE ET PROCEDE DE MOULAGE L'UTILISANT

(84) Designated Contracting States:
**AT CH DE IT LI**

(30) Priority: **16.10.2003   JP 2003356137**

(43) Date of publication of application:
**28.06.2006   Bulletin 2006/26**

(73) Proprietor: **SUMITOMO HEAVY INDUSTRIES, LTD.**
**Shinagawa-ku,**
**Tokyo 141-8686 (JP)**

(72) Inventor: **OKADA, Norihito,**
**c/o SUMITOMO HEAVY INDUSTRIES,LTD**
**Inage-ku, Chiba-shi,**
**Chiba 2630001 (JP)**

(74) Representative: **Wagner, Karl H.**
**Wagner & Geyer Partnerschaft**
**Patent- und Rechtsanwälte**
**Gewürzmühlstrasse 5**
**80538 München (DE)**

(56) References cited:
**EP-A- 1 004 421        DE-A1- 19 909 307**
**JP-A- 8 197 595         JP-A- 10 151 543**
**JP-A- 11 019 997        JP-A- 2001 049 274**
**JP-A- 2003 211 512      JP-A- 2003 269 569**
**JP-U- 5 027 407         US-A- 6 026 696**

## Description

TECHNICAL FIELD

The present invention relates to a motor-driven injection molding machine and a molding method using the same.

BACKGROUND ART

Conventionally, in a motor-driven injection molding machine, resin is melted within a heating cylinder through application of heat; the thus-molten resin is injected under high pressure into a cavity of a mold apparatus so as to fill the cavity; and the resin within the cavity is cooled to set, thereby yielding a molded product.

The motor-driven injection molding machine has a mold clamping apparatus, a mold apparatus, and an injection apparatus. The mold clamping apparatus includes a stationary platen, a movable platen which serves as a member-to-be-driven, and a mold clamping motor. The mold apparatus includes a stationary mold and a movable mold. The mold clamping motor advances and retreats the movable platen to thereby bring the movable mold in contact with the stationary mold and move the movable mold away from the stationary mold, whereby mold closing, mold clamping, and mold opening can be performed.

The injection apparatus includes a heating cylinder which melts, through application of heat, a resin supplied from a hopper, and an injection nozzle which injects the thus-molten resin. A screw which serves as a member-to-be-driven is disposed within the heating cylinder rotatably and in a manner capable of advancing and retreating. The screw is advanced to inject the resin from the injection nozzle and is rotated to meter the resin.

In a metering step, rotation generated by driving a metering motor is transmitted to the screw to thereby rotate the screw; and, in association with the rotation of the screw, the screw is retreated. In an injection step, a rotational motion of rotation generated by driving an injection motor is transmitted to a ball screw, and the ball screw converts the rotational motion to a linear motion and transmits the linear motion to the screw, thereby advancing the screw.

Meanwhile, transmission of rotation generated by each of the above motors through a speed-reducing mechanism, a pulley, and the like involves a drop in mechanical efficiency and an increase in inertia. In order to cope with the problem, there is provided a built-in-motor-type injection apparatus in which the screw, the metering motor, and the injection motor are disposed on the same axis (refer to, for example, JP 09-267369 A).

US 6,026,696 discloses a device for converting a rotary motion into an axial motion which device comprises an outer tube with internal contours, an inner shaft with a head with external contours, an inner chamber formed between tube and shaft and a plurality of roller elements arranged in the inner chamber and around the head, which are in active engagement with at least one contour with the internal contour of the tube and the external contour of the head, whose position can be adjusted essentially by rotation relative to the roller elements. The shaft is surrounded by a tubular element arranged coaxially with respect to the central axis of the shaft, which moves translationally relative to the tube when the device is actuated.

JP 2003-269569 A discloses a ball screw. In order to provide a ball screw capable of almost uniformly supplying oil to a plurality of places without providing many oil supplying holes in an axial direction, either one or both of a screw shaft and a nut are provided with an oil supplying hole extended along an axial direction in a screwing part which is the screw shaft or the nut. A plurality of oil supplying holes in a radial direction communicating with the oil supplying hole in the axial direction and opened in a screw groove are provided apart from each other in the axial direction. The internal diameters of the plurality of oil supplying holes in the radial direction are set different from each other according to the positions in an axial direction so that the quantities of oil discharged from the oil supplying holes in the radial direction are more equalized than when they are set equal.

JP 2001-049274 A discloses a grease for a ball screw in a driving device of a motor-driven injection molding machine. In order to provide a lubricating grease which prevents premature failure of ball screws to be used in the driving system of a motor-driven injection molding machine, in the driving system of a motor-driven injection molding machine, a grease composed of a urea based substance as the thickening agent and a mineral oil or a synthetic oil having a base oil viscosity (40 °C) of 300 mm$^2$/s as the base oil is used as the ball screw lubricant, and the incorporation consistency of this grease is rendered not less than 300. This grease is particularly applied to the balls constituting ball screws which have a ball diameter of not smaller than 15.9 mm (5/8 in).

DISCLOSURE OF THE INVENTION

PROBLEMS TO BE SOLVED BY THE INVENTION

However, in the above-mentioned conventional motor-driven injection molding machine, in order to generate a sufficiently high injection pressure, the inside diameter of a stator of the injection motor is increased so as to increase the torque of the injection motor through an increase in the number of turns of a stator coil, and the diameter of a ball screw shaft of a ball screw is increased. As as result, responsiveness in terms of buildup of injection speed deteriorates accordingly.

Also, in the mold clamping apparatus, in order to generate a sufficiently large mold clamping force, if the inside diameter of a stator of the mold clamping motor is increased so as to increase the torque of the mold clamping motor through an increase in the number of turns of a stator coil and if the diameter of a ball screw shaft of a ball screw is increased, responsiveness in terms of buildup of mold clamping speed will deteriorate accordingly.

An object of the present invention is to solve the above-mentioned problems in the conventional motor-driven injection molding machine and to provide a motor-driven injection molding machine in which responsiveness of a member-to-be-driven can be enhanced, as well as a molding method using the same.

MEANS FOR SOLVING THE PROBLEMS

To achieve the above object, a motor-driven injection molding machine of the present invention is provided as set forth in claims 1 or 3. Also provided is a molding method as set forth in claims 8 or 10. Preferred embodiments of the present invention may be gathered from the dependent claims.

In a case, where, in the motor, the ratio of the stacking length of the magnet of the rotor to the inside diameter of the stator is 3 or more, responsiveness of the member-to-be-driven can be sufficiently enhanced.

BRIEF DESCRIPTION OF THE DRAWINGS

[FIG. 1] Sectional view showing essential portions of an injection apparatus of a motor-driven injection molding machine according to a first embodiment of the present invention.
[FIG. 2] Diagram explaining characteristics of the injection apparatus of the motor-driven injection molding machine according to the first embodiment of the present invention.
[FIG. 3] View showing essential portions of an injection apparatus of a motor-driven injection molding machine according to a second embodiment of the present invention.

BEST MODE FOR CARRYING OUT THE INVENTION

Embodiments of the present invention will next be described in detail with reference to the drawings.

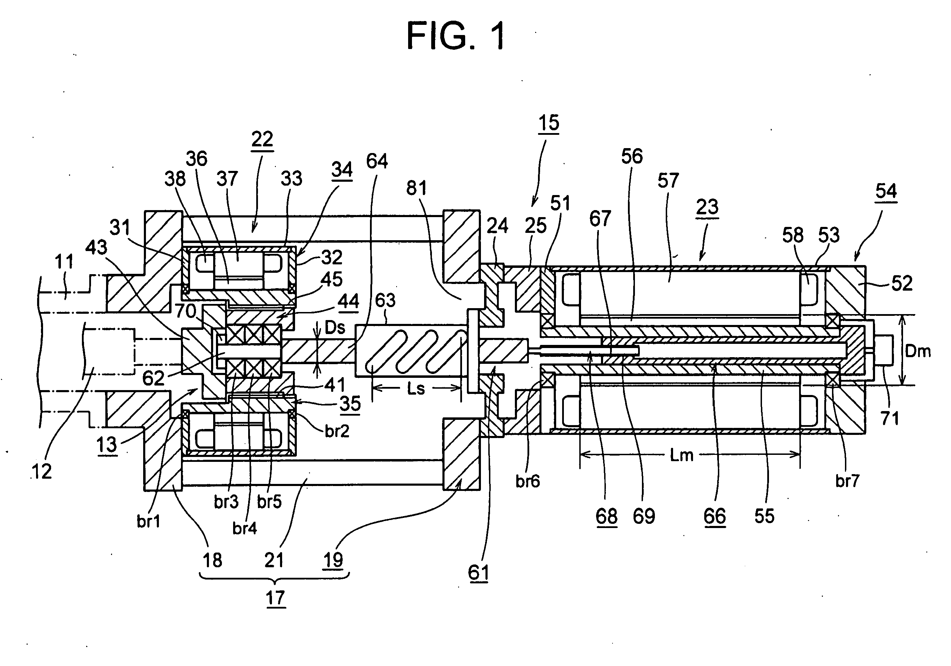

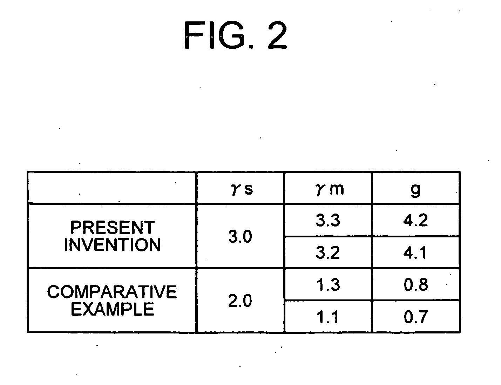

FIG. 1 is a sectional view showing essential portions of an injection apparatus of a motor-driven injection molding machine according to a first embodiment of the present invention. FIG. 2 is a diagram explaining characteristics of the injection apparatus of the motor-driven injection molding machine according to the first embodiment of the present invention.
In FIG. 1, reference numeral 11 denotes a heating cylinder which serves as a cylinder member. An unillustrated injection nozzle is disposed at the front end (left end in FIG. 1) of the heating cylinder 11. A screw 12 which serves as a first member-to-be-driven and as an injection member is disposed within the heating cylinder 11 rotatably and in a manner capable of advancing and retreating (moving in a left-right direction in FIG. 1).
The screw 12 has an unillustrated screw head at the front end; extends rearward (rightward in FIG. 1) within the heating cylinder 11; and is fixed at the rear end (right end in FIG. 1) to a bearing box 13. An unillustrated spiral flight is formed on the outer circumferential surface of the screw 12, and a groove is formed along the flight.
An unillustrated resin supply port is formed in the heating cylinder 11 at a predetermined position. An unillustrated hopper is fixed to the resin supply port. The location of the resin supply port corresponds to a rear end portion of the above-mentioned groove in a condition where the screw 12 is advanced to the front (leftmost position in FIG. 1) within the heating cylinder 11.
Accordingly, in a metering step, when the screw 12 is rotated, pelletlike resin is supplied from the hopper into the heating cylinder 11, and the supplied resin is advanced through the groove. In association with the advancement of the resin, the screw 12 is retreated (moved rightward in FIG. 1).
An unillustrated heater is disposed around the heating cylinder 11. The heater heats the heating cylinder 11, thereby melting the resin present in the groove. Accordingly, when the screw 12 is retreated by a predetermined amount in association with the advancement of the resin, molten resin for one shot is stored ahead of the screw head.
Next, in an injection step, when the screw 12 is advanced (moved leftward in FIG. 1) without rotating, the resin stored ahead of the screw head is injected from the injection nozzle into a cavity of an unillustrated mold apparatus so as to fill the cavity.
Meanwhile, a drive section 15 is disposed on the rear side of the heating cylinder 11 in order to rotate, advance, and retreat the screw 12. The drive section 15 includes an injection frame 17; a first motor 22, which is disposed within the injection frame 17 and serves as a metering motor; and a second motor 23, which is disposed rearward of the injection frame 17 and serves as an injection motor. The screw 12, the first motor 22, and the second motor 23 are disposed on the same axis.
The injection frame 17 includes a front injection support 18; a rear injection support 19 disposed rearward of the front injection support 18; and rods 21, which connect the front injection support 18 and the rear injection support 19 and maintain a predetermined distance between the front injection support 18 and the rear injection support 19. The heating cylinder 11 is attached to the front end of the front injection support 18, and the first motor 22 is attached to the rear end of the front injection support 18. A load cell 24 which serves as a load detector is attached to the rear end of the rear injection support 19. Similarly, the second motor 23 is attached to the rear end of the rear injection support 19 via an annular presser 25.
The first motor 22 includes a housing 34 composed of a front flange 31, a rear flange 32, and a tubular frame 33; a hollow output shaft 35, which is rotatably supported by the housing 34 via bearings br1 and br2; a rotor 36 attached to the output shaft 35; and a stator 37, which is attached to the frame 33 while a gap is formed between the same and the rotor 36. By means of fixing the front flange 31 to the front injection support 18, the first motor 22 is attached to the injection frame 17. Reference numeral 38 denotes a stator coil. By means of applying current to the stator coil 38, the first motor 22 can be driven.

In a metering step, by means of driving the first motor 22, the screw 12 can be rotated. In order to implement this operation, internal splines 41 which collectively serve as a first engagement element are formed on the inner circumferential surface of the output shaft 35 at a predetermined position (in the present embodiment, in a region ranging axially between the center and the rear end of the output shaft 35).

The bearing box 13 includes a disklike bottom portion 43 to which the rear end of the screw 12 is attached, and a tubular side portion 44 which extends rearward from a limb of the bottom portion 43. The bearing box 13 accommodates bearings br3 to br5, which are thrust bearings.

External splines 45 which collectively serve as a second engagement element are formed on the outer circumferential surface of the side portion 44 at a predetermined position; in the present embodiment, at a rear end portion (right end portion in FIG. 1). The internal splines 41 and the corresponding external splines 45 are engaged together in an axially slidable manner and in a circumferentially nonrotatable manner, thereby constituting a first rotation transmission.

Accordingly, in a metering step, rotation generated on the output shaft 35 by driving the first motor 22 is transmitted to the bearing box 13 via the first rotation transmission and is transmitted further to the screw 12. At this time, when the screw 12 is rotated, pelletlike resin is supplied from the hopper into the heating cylinder 11, and the supplied resin is advanced through the groove. In association with the advancement of the resin, while the internal and external splines 41 and 45 are held engaged, the bearing box 13 is retreated in relation to the output shaft 35, and thus the screw 12 is retreated. Metering can thus be performed. Notably, when the screw 12 is retreated, back pressure is applied to the screw 12 against pressure generated by the resin.

The second motor 23 includes a housing 54 composed of a front flange 51, a rear flange 52, and a tubular frame 53; a hollow output shaft 55, which is rotatably supported by the housing 54 via bearings br6 and br7; a rotor 56 attached to the output shaft 55; and a stator 57, which is attached to the frame 53 while a gap is formed between the same and the rotor 56. By means of fixing the front flange 51 to the load cell 24 via the presser 25, the second motor 23 is attached to the injection frame 17. Reference numeral 58 denotes a stator coil. By means of applying current to the stator coil 58, the second motor 23 can be driven.

In an injection step, by means of driving the second motor 23, the screw 12 can be advanced without being rotated. In order to implement this operation, the bearings br3 to br5 disposed in the bearing box 13 rotatably support a ball-screw-shaft-spline-shaft unit 61 which serves as a transmission shaft, and bear a thrust load. In order to implement this function, a columnar portion 62 is formed at the front end of the ball-screw-shaft-spline-shaft unit 61. A ball screw shaft portion 64 is formed behind the columnar portion 62, and a spline shaft portion 68 is formed behind the ball screw shaft portion 64. Reference numeral 70 denotes a nut which is screw-engaged with unillustrated external threads formed on the outer circumferential surface of the ball-screw-shaft-spline-shaft unit 61 to thereby be fixed to the ball-screw-shaft-spline-shaft unit 61 and which serves as a retaining member for preventing the bearings br3 to br5 from coming off.

The front end of the ball-screw-shaft-spline-shaft unit 61 is disposed within the first motor 22; the ball-screw-shaft-spline-shaft unit 61 extends rearward through the rear injection support 19, the load cell 24, and the presser 25; and the rear end of the ball-screw-shaft-spline-shaft unit 61 is disposed within the second motor 23. In order to implement this configuration, a through hole 81 is formed in the rear injection support 19; a ball nut 63 which serves as a nut is attached, within the through hole 81, to the rear injection support 19 via the load cell 24; and the ball nut 63 and the ball screw shaft portion 64 are screw-engaged together. The ball nut 63 and the ball screw shaft portion 64 constitute a ball screw. The ball screw functions as a motion direction conversion portion for converting a rotational motion to a linear motion accompanied by rotation; i.e., to a rotational, linear motion. The ball nut 63 serves as a first conversion element, and the ball screw shaft portion 64 serves as a second conversion element. In place of the ball screw, a roller screw may be used as the motion direction conversion portion. In this case, a roller nut in place of the ball nut 63 is used as the first conversion element and as a nut, and a roller screw shaft portion in place of the ball screw shaft portion 64 is used as the second conversion element and as a screw shaft.

A tubular latch member 66 is disposed within the output shaft 55. The latch member 66 is fixed to the output shaft 55 and extends from the rear end of the output shaft 55 to the vicinity of the front end of the output shaft 55. Internal splines 67 which collectively serve as a first engagement element are formed on the inner circumferential surface of the latch member 66 at the front end. The internal splines 67 are spline-engaged with corresponding external splines 69 which are formed on the outer circumferential surface of the spline shaft portion 68 and collectively serve as a second engagement element. The internal splines 67 and the corresponding external splines 69 are engaged together in an axially slidable manner and in a circumferentially nonrotatable manner, thereby constituting a second rotation transmission.

An encoder 71 which serves as a rotational-speed detector is attached to the rear end of the latch member 66. The encoder 71 directly detects the rotational speed of the output shaft 55, the ball-screw-shaft-spline-shaft unit 61, and the second motor 23. Accordingly, an unillustrated control unit can calculates the position of the ball-screw-shaft-spline-shaft unit 61 on the basis of the rotational speed of the ball-screw-shaft-spline-shaft unit 61.

In an injection step, rotation generated on the output shaft 55 by the second motor 23 is transmitted to the latch member 66 and further to the ball-screw-shaft-spline-shaft unit 61 via the second rotation transmission; the ball screw converts the rotational motion to a rotational, linear motion; and the rotational, linear motion is transmitted to the bearing box 13. Since the bearing box 13 has such a structure that at least three bearings br3 to br5 rotatably support the ball-screw-shaft-spline-shaft unit 61, only a linear motion of the rotational, linear motion transmitted to the bearing box 13 is output and transmitted to the screw 12.

As a result, by means of driving the second motor 23, the screw 12 can be advanced without being rotated, whereby injection can be performed. Notably, by means of driving the second motor 23 in the reverse direction, the screw 12 can be retreated without being rotated, whereby suck-back can be performed.

At least two bearings br4 and br5 bear a thrust load directed in the advancing direction of the screw 12, and at least one bearing br3 bears a thrust load directed in the retreating direction of the screw 12. In other words, since at least three bearings br3 to br5 bear a thrust load, bearing components which rotate together with the ball screw shaft portion 64 can be reduced in outside diameter. Accordingly, rotational inertia can be reduced.

Meanwhile, in a built-in-type injection apparatus configured as described above, in order to generate a sufficiently high injection pressure, if inside diameter Dm of the stator 57 of the second motor 23 is increased and if diameter Ds of the ball screw shaft portion 64 indicative of the diameter of a screw shaft in a ball screw is increased, inertia generated in the second motor 23 (inertia of the output shaft 55, the rotor 56, the latch member 66, and the like) and inertia of the ball-screw-shaft-spline-shaft unit 61 increase accordingly; as a result, responsiveness of the screw 12 and responsiveness in terms of buildup of injection speed deteriorate accordingly.

In order to cope with the above problem, in the present embodiment, the inside diameter Dm and the diameter Ds are reduced to thereby enhance responsiveness of the screw 12 and responsiveness in terms of buildup of injection speed. Additionally, in order to avoid a drop in injection pressure which would otherwise accompany the reduction of the inside diameter Dm and the diameter Ds, in the second motor 23, the stacking length Lm of a magnet; for example, a permanent magnet is increased; and in the ball screw, length Ls of a screw portion of the ball nut 63 is increased. The stacking length Lm is determined with the condition that a hand can reach a working zone when the stator coil 58 is to be wound from inside the stator 57; and the length Ls is determined with the condition that a hand can reach a working zone when the inner circumferential surface of the ball nut 63 is to be polished. The diameter Ds is the center distance between balls as measured when the balls in the ball nut 63 are most distant from each other, and is determined with the condition that the ball screw shaft portion 64 does not buckle. The length Ls is the axial length of a screw portion formed on the ball nut 63.

Torque TM of the second motor 23 is proportional to the product of the square of the inside diameter Dm and the stacking length Lm and can be expressed by the following formula.

$$TM = k1 \cdot Dm^2 \cdot Lm$$

k1: constant

Accordingly, when the inside diameter Dm is reduced to Dm', increasing the stacking length Lm through multiplication by $(Dm/Dm')^2$ allows the torque TM to remain unchanged.

Notably, increasing the stacking length Lm may be favorably accompanied by an increase in the number of laminations used to form the stator 57, use of a steel pipe as the output shaft 55, and connection of a plurality of shaft elements for forming the output shaft 55.

Load rating Wn of the ball screw is determined from the diameter and the number of balls subjected to load; is proportional to the product of the diameter Ds and the length Ls; and can be expressed by the following formula.

$$Wn = k2 \cdot Ds \cdot Ls$$

k2: constant

Accordingly, when the balls have the same diameter, and the diameter Ds is reduced to Ds', increasing the length Ls through multiplication by (Ds/Ds') so as to increase the number of balls allows the load rating Wn to remain unchanged.

In the present embodiment, the second motor 23 is configured such that ratio γm of the stacking length Lm to the inside diameter Dm is 3 or more; and the ball screw is configured such that ratio γs of the length Ls to the diameter Ds is 3 or more.

The greater the ratios γs and γm, the more enhanced is the responsiveness in terms of injection speed of the screw 12. However, in view of the feasibility of the manufacture of the second motor 23 and the ball screw and the feasibility of layout of components of the injection apparatus, the ratios γs and γm are preferably "10" or less, practically "5" or less. Generally, in manufacture of the ball screw shaft, increasing its axial length raises no problem so long as the ball screw shaft has strength against deflection and buckling. By contrast, in manufacture of the ball nut, the greater its axial length, the more difficult the processing of its inner circumferential surface becomes. Therefore, conventionally, a plurality of ball nuts are connected so as to increase the overall axial length.

As shown in FIG. 2, in the present invention, use of a ball screw having a ratio γs of 3.0 and the second motor 23 having a ratio γm of 3.3 could attain an acceleration g of 4.2 for advancement of the screw 12. Also, use of a ball screw having a ratio γs of 3.0 and the second motor 23 having a ratio γm of 3.2 could attain an acceleration g of 4.1.

By contrast, in Comparative Example (prior art), when a ball screw having a ratio γs of 2.0 and the second motor 23 having a ratio γm of 1.3 were used, the acceleration g was 0.8. When a ball screw having a ratio γs of 2.0 and the second motor 23 having a ratio γm of 1.1 were used, the acceleration g was 0.7.

Thus, by means of using the second motor 23 having a ratio γm of 3 or more and the ball screw having a ratio γs of 3 or more, the acceleration g can be of a sufficiently high value. Accordingly, not only can a sufficiently high injection pressure be generated, but also responsiveness of the screw 12 and responsiveness in terms of buildup of injection speed can be sufficiently enhanced.

Next, a second embodiment of the present invention will be described. Like structural elements of the first and second embodiments are denoted by like reference numerals, and repeated description thereof is omitted. For the effect that the second embodiment yields through employment of structural elements similar to those of the first embodiment, the effect that the first embodiment yields is applied accordingly.

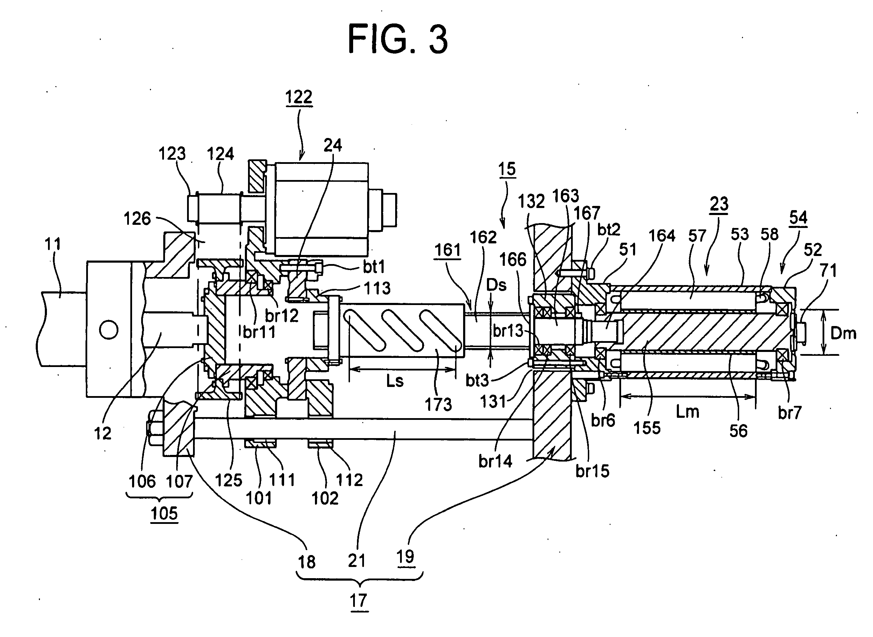

FIG. 3 is a view showing essential portions of an injection apparatus of a motor-driven injection molding machine according to the second embodiment of the present invention.

In this case, the injection frame 17 includes the front injection support 18; the rear injection support 19 disposed rearward of the front injection support 18; and the rods 21, which connect the front injection support 18 and the rear injection support 19 and maintain a predetermined distance between the front injection support 18 and the rear injection support 19. The heating cylinder 11 which serves as a cylinder member is attached to the front end of the front injection support 18; a pressure plate 101 which serves as a press member, and a load cell retainer 102 which serves as a load detector support, are disposed along the rods 21 via bushes 111 and 112, respectively, in a slidable manner and in a manner capable of advancing and retreating; and a first motor 122 which serves as a metering motor is attached to the pressure plate 101. The load cell 24 which serves as a load detector is sandwiched between the pressure plate 101 and the load cell retainer 102 and is fixed at its limb by use of bolts bt1. Furthermore, the second motor 23 which serves as an injection motor is attached to the rear end of the rear injection support 19.

In a metering step, by means of driving the first motor 122, the screw 12 can be rotated. In order to implement this operation, a rotational member 105 is rotatably supported by the pressure plate 101 via bearings br11 and br12, and the screw 12 is fixed to a disk element 106 of the rotational member 105. A driving pulley 124 which serves as a driving element is attached to an output shaft 123 of the first motor 122, and a driven pulley 125 which serves as a driven element is attached to a tubular element 107 of the rotational member 105. A timing belt 126 which serves as a transmission member extends between the driving pulley 124 and the driven pulley 125 in a tensed condition.

The second motor 23 includes the housing 54 composed of the front flange 51, the rear flange 52, and the tubular frame 53; a hollow output shaft 155, which is rotatably supported by the housing 54 via the bearings br6 and br7; the rotor 56 attached to the output shaft 155; and the stator 57, which is attached to the frame 53 while a gap is formed between the same and the rotor 56. By means of fixing the front flange 51 to the rear injection support 19 by use of bolts bt2, the second motor 23 is attached to the injection frame 17.

In an injection step, by means of driving the second motor 23, the screw 12 can be advanced without being rotated. In order to implement this operation, a through hole 131 is formed in the rear injection support 19 at a predetermined position; a bearing holder 132 is disposed in the through hole 131; and the bearing holder 132 is fixed to the front flange 51 by use of bolts bt3. In the bearing holder 132, at least three bearings br13 to br15 which are thrust bearings and collectively serve as a transmission shaft support rotatably support a ball-screw-shaft-spline-shaft unit 161 which serves as a transmission shaft, and bear a thrust load.

At least two bearings br13 and br14 bear a thrust load directed in the advancing direction of the screw 12, and at least one bearing br15 bears a thrust load directed in the retreating direction of the screw 12. In other words, since at least three bearings br13 to br15 bear a thrust load, bearing components which rotate together with a ball screw shaft portion 162 can be reduced in outside diameter. Accordingly, rotational inertia can be reduced.

A large-diameter ball screw shaft portion 162 which serves as a screw shaft is formed at a front half portion of the ball-screw-shaft-spline-shaft unit 161; an intermediate-diameter column portion 163 is formed behind the ball screw shaft portion 162; and a small-diameter spline shaft portion 164 is formed behind the column portion 163. Reference numeral 166 denotes a presser plate which serves as a first retaining member for preventing the bearings br13 and br14 from coming off the bearing holder 132. Reference numeral 167 is a lock nut which is screw-engaged with unillustrated external threads formed on the outer circumferential surface of the ball-screw-shaft-spline-shaft unit 161 to thereby be fixed to the ball-screw-shaft-spline-shaft unit 161, and serves as a second retaining member for preventing the bearing br15 from coming off.

The ball-screw-shaft-spline-shaft unit 161 axially overlaps with the first motor 122 and extends rearward through the load cell 24, the rear injection support 19, the bearing holder 132, and the like; and the rear end of the ball-screw-shaft-spline-shaft unit 161 is disposed within the second motor 23. In order to implement this configuration, a ball nut 173 which serves as a nut is attached to a ball screw support 113, and the ball nut 173 and the ball screw shaft portion 162 are screw-engaged together. The ball nut 173 and the ball screw shaft portion 162 constitute a ball screw. The ball screw functions as a motion direction conversion portion for converting a rotational motion to a linear motion. The ball nut 173 serves as a first conversion element, and the ball screw shaft portion 162 serves as a second conversion element. In place of the ball screw, a roller screw may be used as the motion direction conversion portion. In this case, a roller nut in place of the ball nut 173 is used as the first conversion element and as a nut, and a roller screw shaft portion in place of the ball screw shaft portion 162 is used as the second conversion element and as a screw shaft.

Internal splines which collectively serve as a first engagement element are formed on the inner surface of the output shaft 155 at the front end. The internal splines are spline-engaged with corresponding external splines which are formed on the outer circumferential surface of the spline shaft portion 164 and collectively serve as a second engagement element. The internal splines and the corresponding external splines are engaged together in an axially immovable manner and in a circumferentially nonrotatable manner, thereby constituting a second rotation transmission.

Since the spline shaft portion 164 and the output shaft 155 are spline-engaged together, even when a large torque is transmitted from the output shaft 155 to the spline shaft portion 164, seizure or a like problem does not arise between the output shaft 155 and the ball-screw-shaft-spline-shaft unit 161.

The encoder 71 which serves as a rotational-speed detector is attached to the rear end of the output shaft 155. The encoder 71 directly detects the rotational speed of the output shaft 155, the ball-screw-shaft-spline-shaft unit 161, and the second motor 23. Accordingly, an unillustrated control unit can calculates the position of the ball nut 173 on the basis of the rotational speed of the ball-screw-shaft-spline-shaft unit 161.

Also, in the present embodiment, in order to generate a sufficiently high injection pressure in the injection apparatus, the inside diameter Dm of the stator 57 of the second motor 23 is increased, and the diameter Ds of the ball screw shaft portion 64 indicative of the diameter of the screw shaft in the ball screw is increased. As a result, inertia generated in the second motor 23 (inertia of the output shaft 155, the rotor 56, and the like) and inertia of the ball-screw-shaft-spline-shaft unit 161 increase accordingly; consequently, responsibility of the screw 12 and responsibility in terms of buildup of injection speed deteriorate accordingly.

In order to cope with the above problem, in the present embodiment, the inside diameter Dm and the diameter Ds are reduced to thereby enhance responsiveness of the screw 12 and responsiveness in terms of buildup of injection speed. Additionally, in order to avoid a drop in injection pressure which would otherwise accompany the reduction of the inside diameter Dm and the diameter Ds, in the second motor 23, the stacking length Lm of a magnet; for example, a permanent magnet, is increased; and in the ball screw, the length Ls of a screw portion of the ball nut 63 is increased.

Specifically, the second motor 23 is configured such that the ratio $\gamma m$ of the stacking length Lm to the inside diameter Dm is 3 or more; and the ball screw is configured such that the ratio $\gamma s$ of the length Ls to the diameter Ds is 3 or more.

The above embodiments are described while mentioning the injection apparatus of the motor-driven injection molding machine. However, in an ejector apparatus, a mold clamping apparatus, or the like, when responsibility of a member-to-be-driven; i.e., responsibility of an ejector pin, a movable platen, or a like member is to be enhanced, the present invention can be applied to a motor which serves as a driving member, and to a ball screw which serves as a motion direction conversion portion.

The present invention is not limited to the above-described embodiments. Numerous modifications and variations of the present invention are possible within the scope of the present invention as defined by the appended claims.

INDUSTRIAL APPLICABILITY

The present invention can be applied to a motor-driven injection molding machine.

Claims

1. A motor-driven injection molding machine comprising:

   a member-to-be-driven (12);
   a motor (23) for operating the member-to-be-driven (12); and
   a motion direction conversion portion (63, 64) disposed between the motor (23) and the member-to-be-driven (12) and adapted to convert to a linear motion a rotational motion of rotation generated by driving the motor (23), **characterized in that** in the motor (23), a ratio ($\gamma$m) of a stacking length (Lm) of a magnet of a rotor (56) to an inside diameter (Dm) of a stator (57) is 3 or more.

2. A motor-driven injection molding machine according to claim 1, wherein, in the motion direction conversion portion (63, 64), a ratio ($\gamma$s) of a length (Ls) of a screw portion of a nut (63) to a diameter (Ds) of a screw shaft (64) is 3 or more.

3. A motor-driven injection molding machine comprising:

a member-to-be-driven (12);
a motor (23) for operating the member-to-be-driven (12); and
a motion direction conversion portion (63, 64) disposed between the motor (23) and the member-to-be-driven (12) and adapted to convert to a linear motion a rotational motion of rotation generated by driving the motor (23), **characterized in that** in the motion direction conversion portion (63, 64), a ratio ($\gamma$s) of a length (Ls) of a screw portion of a nut (63) to a diameter (Ds) of a screw shaft (64) is 3 or more.

4. A motor-driven injection molding machine according to any one of claims 1 to 3, wherein:

the motion direction conversion portion (63, 64) and the motor (23) are disposed on the same axis;
the motor (23) comprises a hollow output shaft (55); and
rotation of the motor (23) is transmitted, within the output shaft (23), to a transmission shaft (61) comprising the screw shaft (64) of the motion direction conversion portion (63, 64).

5. A motor-driven injection molding machine according to any one of claims 1 to 4, wherein:

the motor (23) is an injection motor; and
the injection motor (23) and a metering motor (22) are disposed on the same axis.

6. A motor-driven injection molding machine according to any one of claims 1 to 5, wherein the motion direction conversion portion (63, 64) is adapted to convert a rotational motion to a rotational, linear motion.

7. A motor-driven injection molding machine according to any one of claims 1 to 5, wherein the motion direction conversion portion (63, 64) is adapted to convert a rotational motion to a linear motion.

8. A molding method using a motor-driven injection molding machine having a member-to-be-driven (12), a motor (23), and a motion direction conversion portion (63, 64) disposed between the motor (23) and the member-to-be-driven (12), the method comprising the steps of:

generating rotation by means of driving the motor (23);
converting a rotational motion of the rotation to a linear motion; and
operating the member-to-be-driven (12) by means of the linear motion, **characterized in that**:

in the motor (23), a ratio ($\gamma$m) of a stacking length (Lm) of a magnet of a rotor (56) to an inside diameter (Dm) of a stator (57) is 3 or more.

9. A molding method using a motor-driven injection molding machine according to claim 8, wherein a ratio ($\gamma$s) of a length (Ls) of a screw portion of a nut (63) to a diameter (Ds) of a screw shaft (64) is 3 or more.

10. A molding method using a motor-driven injection molding machine having a member-to-be-driven (12), a motor (23), and a motion direction conversion portion (63, 64) disposed between the motor (23) and the member-to-be-driven (12), the method comprising the steps of:

generating rotation by means of driving the motor (23);
converting a rotational motion of the rotation to a linear motion; and
operating the member-to-be-driven (12) by means of the linear motion, **characterized in that** in the motion direction conversion portion (63, 64), a ratio ($\gamma$s) of a length (Ls) of a screw portion of a nut (63) to a diameter (Ds) of a screw shaft (64) is 3 or more.

**Patentansprüche**

1. Motorgetriebene Spritzgussmaschine, die Folgendes aufweist:

ein anzutreibendes Glied (12);
einen Motor (23) zum Betätigen des anzutreibenden Glieds (12); und
einen Bewegungsrichtungsumwandlungsteil (63, 64), der zwischen dem Motor (23) und dem anzutreibenden Glied (12) angeordnet ist, und angepasst ist, um eine Drehbewegung der Rotation, die durch Antreiben des Motors (23) erzeugt wird, in eine lineare Bewegung umzuwandeln,

**dadurch gekennzeichnet, dass**

in dem Motor (23) ein Verhältnis ($\gamma$m) einer Stapellänge (Lm) eines Magneten eines Rotors (56) zu einem Innendurchmesser (Dm) eines Stators (57) 3 oder mehr beträgt.

2. Motorgetriebene Spritzgussmaschine gemäß Anspruch 1, wobei in dem Bewegungsrichtungsumwandlungsteil (63, 64) ein Verhältnis ($\gamma$s) einer Länge (Ls) eines Schnecken- bzw. Schraubenteils einer Mutter (63) zu einem Durchmesser einer Gewindespindel bzw. -welle (64) 3 oder mehr beträgt.

3. Motorgetriebene Spritzgussmaschine, die Folgendes aufweist:

   ein anzutreibendes Glied (12);
   einen Motor (23) zum Betätigen des anzutreibenden Glieds (12); und
   einen Bewegungsrichtungsumwandlungsteil (63, 64), der zwischen dem Motor (23) und dem anzutreibenden Glied (12) angeordnet ist, und angepasst ist, um eine Drehbewegung der Rotation, die durch Antreiben des Motors (23) erzeugt wird, in eine lineare Bewegung umzuwandeln,

   **dadurch gekennzeichnet, dass**

   in dem Bewegungsrichtungsumwandlungsteil (63, 64) ein Verhältnis ($\gamma$s) einer Länge (Ls) eines Schnecken- bzw. Schraubenteils einer Mutter (63) zu einem Durchmesser (Ds) einer Gewindespindel bzw. -welle (64) 3 oder mehr beträgt.

4. Motorgetriebene Spritzgussmaschine gemäß einem der Ansprüche 1 bis 3, wobei:

   der Bewegungsrichtungsumwandlungsteil (63, 64) und der Motor (23) auf der gleichen Achse angeordnet sind;
   der Motor (23) eine hohle Abtriebswelle (55) aufweist; und
   die Drehung des Motors (23) innerhalb der Abtriebswelle (23) auf eine Übertragungswelle (61) übertragen wird, die die Gewindespindel bzw. -welle (64) des Bewegungsrichtungsumwandlungsteils (63, 64) aufweist.

5. Motorgetriebene Spritzgussmaschine gemäß einem der Ansprüche 1 bis 4, wobei:

   der Motor (23) ein Einspritzmotor ist; und
   der Einspritzmotor (23) und ein Dosierungsmotor (22) auf der gleichen Achse angeordnet sind.

6. Motorgetriebene Spritzgussmaschine gemäß einem der Ansprüche 1 bis 5, wobei der Bewegungsrichtungsumwandlungsteil (63. 64) angepasst ist, um eine Drehbewegung in eine drehende, lineare Bewegung umzuwandeln.

7. Motorgetriebene Spritzgussmaschine gemäß einem der Ansprüche 1 bis 5, wobei der Bewegungsrichtungsumwandlungsteil (63. 64) angepasst ist, um eine Drehbewegung in eine lineare Bewegung umzuwandeln.

8. Formverfahren unter Verwendung einer motorgetriebenen Spritzgussmaschine mit einem anzutreibenden Glied (12), einem Motor (23) und einem Bewegungsrichtungsumwandlungsteil (63, 64), der zwischen dem Motor (23) und dem anzutreibenden Glied (12) angeordnet ist,

   wobei das Verfahren die folgenden Schritte aufweist:

   Umwandeln einer Drehbewegung der Drehung in eine lineare Bewegung; und
   Betätigen des anzutreibenden Glieds (12) mittels der linearen Bewegung,

   **dadurch gekennzeichnet, dass**:

   in dem Motor (23) ein Verhältnis ($\gamma$m) einer Stapellänge (Lm) eines Magnet eines Rotors (56) zu einem Innendurchmesser (Dm) eines Stators (57) 3 oder mehr beträgt.

9. Formverfahren unter Verwendung einer motorgetriebenen Spritzgussmaschine gemäß Anspruch 8, wobei ein Verhältnis ein Verhältnis ($\gamma$s) einer Länge (Ls) eines Schnecken- bzw. Schraubenteils einer Mutter (63) zu einem Durchmesser (Ds) einer Gewindespindel bzw. -welle (64) 3 oder mehr beträgt.

10. Formverfahren unter Verwendung einer motorgetriebenen Spritzgussmaschine mit einem anzutreibenden Glied (12), einem Motor (23) und einem Bewegungsrichtungsumwandlungsteil (63, 64), der zwischen dem Motor (23) und dem anzutreibenden Glied (12) angeordnet ist, wobei das Verfahren die folgenden Schritte aufweist:

   Erzeugen einer Drehung mittels Antreiben des Motors (23);
   Umwandeln der drehenden Bewegung der Drehung in eine lineare Bewegung; und
   Betätigen des anzutreibenden Glieds (12) mittels der linearen Bewegung,

   **dadurch gekennzeichnet, dass**

   in dem Bewegungsrichtungsumwandlungsteil (63, 64) ein Verhältnis ($\gamma$s) einer Länge (Ls) eines Schnecken- bzw. Schraubenteils einer Mutter (63) zu einem Durchmesser (Ds) einer Gewindespindel bzw. -welle (64) 3 oder mehr beträgt.

**Revendications**

1. Machine de moulage par injection entraînée par un moteur, comprenant :

   un élément à entraîner (12) ;
   un moteur (23) pour actionner l'élément à entraîner (12) ; et
   une portion de conversion de direction de mouvement (63, 64), disposée entre le moteur (23) et l'élément à entraîner (12) et adaptée à convertir en un mouvement linéaire le mouvement rotatif généré par l'actionnement du moteur (23), **caractérisée en ce que**
   dans le moteur (23), le rapport ($\gamma$m) entre la longueur d'empilage (Lm) d'un aimant d'un rotor (56) et le diamètre intérieur (Dm) d'un stator (57) est supérieur ou égal à 3.

2. Machine de moulage par injection entraînée par un moteur selon la revendication 1, dans laquelle, dans la portion de conversion de direction de mouvement (63, 64), le rapport ($\gamma$s) entre la longueur (Ls) d'une portion filetée d'un écrou (63) et le diamètre (Ds) d'un arbre fileté (64) est supérieur ou égal à 3.

3. Machine de moulage par injection entraînée par un moteur, comprenant :

   un élément à entraîner (12) ;
   un moteur (23) pour actionner l'élément à entraîner (12) ; et
   une portion de conversion de direction de mouvement (63, 64), disposée entre le moteur (23) et l'élément à entraîner (12) et adaptée à convertir en un mouvement linéaire un mouvement rotatif généré par l'entraînement du moteur (23), **caractérisée en ce que**
   dans la portion de conversion de direction de mouvement (63, 64), le rapport ($\gamma$s) entre la longueur (Ls) d'une portion filetée d'un écrou (63) et le diamètre (Ds) d'un arbre fileté (64) est supérieur ou égal à 3.

4. Machine de moulage par injection entraînée par un moteur selon l'une quelconque des revendications 1 à 3, dans laquelle :

   la portion de conversion de direction de mouvement (63, 64) et le moteur (23) sont disposés sur le même axe ;
   le moteur (23) comprend un arbre de sortie creux (55) ; et

la rotation du moteur (23) est transmise, dans l'arbre de sortie (23), à un arbre de transmission (61) comprenant l'arbre fileté (64) de la portion de conversion de direction de mouvement (63, 64).

5. Machine de moulage par injection entraînée par un moteur selon l'une quelconque des revendications 1 à 4, dans laquelle :

   le moteur (23) est un moteur d'injection ; et
   le moteur d'injection (23) et un moteur de dosage (22) sont disposés sur le même axe.

6. Machine de moulage par injection entraînée par un moteur selon l'une quelconque des revendications 1 à 5, dans laquelle la portion de conversion de direction de mouvement (63, 64) est adaptée à convertir un mouvement rotatif en un mouvement linéaire rotatif.

7. Machine de moulage par injection entraînée par un moteur selon l'une quelconque des revendications 1 à 5, dans laquelle la portion de conversion de direction de mouvement (63, 64) est adaptée à convertir un mouvement rotatif en un mouvement linéaire.

8. Procédé de moulage utilisant une machine de moulage par injection entraînée par un moteur, comportant un élément à entraîner (12), un moteur (23), une portion de conversion de direction de mouvement (63, 64) disposée entre le moteur (23) et l'élément à entraîner (12),
   le procédé comprenant les étapes suivantes :

   générer une rotation au moyen d'un actionnement du moteur (23) ;
   convertir le mouvement rotatif de la rotation en un mouvement linéaire ; et
   actionner l'élément à entraîner (12) au moyen du mouvement linéaire,
   **caractérisé en ce que** :

   dans le moteur (23), le rapport ($\gamma$m) entre la longueur d'empilage (Lm) d'un aimant d'un rotor (56) et le diamètre intérieur (Dm) d'un stator (57) est supérieur ou égal à 3.

9. Procédé de moulage utilisant une machine de moulage par injection entraînée par un moteur selon la revendication 8, dans lequel le rapport ($\gamma$s) entre la longueur (Ls) d'une portion filetée d'un écrou (63) et le diamètre (Ds) d'un arbre fileté (64) est supérieur ou égal à 3.

10. Procédé de moulage utilisant une machine de moulage par injection entraînée par un moteur, comportant un élément à entraîner (12), un moteur (23), une portion de conversion de direction de mouvement (63, 64) disposée entre le moteur (23) et l'élément à entraîner (12), le procédé comprenant les étapes suivantes :

générer une rotation au moyen d'un actionnement du moteur (23) ;
convertir le mouvement rotatif de la rotation en un mouvement linéaire ; et
actionner l'élément à entraîner (12) au moyen du mouvement linéaire,
**caractérisé en ce que** :

dans la portion de conversion de direction de mouvement (63, 64), le rapport ($\gamma$s) entre la longueur (Ls) d'une portion filetée d'un écrou (63) et le diamètre (Ds) d'un arbre fileté (64) est supérieur ou égal à 3.

# FIG. 1

# FIG. 2

|  | $\gamma s$ | $\gamma m$ | g |
|---|---|---|---|
| PRESENT INVENTION | 3.0 | 3.3 | 4.2 |
|  |  | 3.2 | 4.1 |
| COMPARATIVE EXAMPLE | 2.0 | 1.3 | 0.8 |
|  |  | 1.1 | 0.7 |

# FIG. 3

**EP 1 674 233 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9267369 A
- US 6026696 A
- JP 2003269569 A
- JP 2001049274 A